# EUROPÄISCHE PATENTANMELDUNG

(11) **EP 4 592 782 A1**
(43) Veröffentlichungstag der Anmeldung: **30.07.2025**
(21) Anmeldenummer: 24153696.0
(22) Anmeldetag: 24.01.2024
(51) Int. Cl.: G05B 23/02

(54) **ZENTRALISATION DER BEDIENUNG UND BEOBACHTUNG**

(71) Anmelder: Siemens Aktiengesellschaft, 80333 München (DE)
(72) Erfinder: Lutz, Benjamin, 76327 Pfinztal (DE)
(74) Vertreter: Siemens Patent Attorneys

(57) **Zusammenfassung**

Vorgeschlagen wird ein Leitsystem (13) für eine technische Anlage, insbesondere Fertigungs-oder Prozessanlage, das dazu ausgebildet ist, eine grafische Darstellung wenigstens eines Objektes (4, 11, 12) und eine von der grafischen Darstellung separate Auflistung (2) von verschiedenen, die technische Anlage betreffenden Elementen, in einer Bildanzeige (1) zur Bedienung und Beobachtung durch einen Operator des Leitsystems (13) visuell darzustellen.

Das Leitsystem (13) ist dadurch gekennzeichnet, dass es dazu ausgebildet ist, auf eine Anforderung des Operators zur Laufzeit der technischen Anlage hin die Auflistung (2) derart anzupassen, dass ausschließlich Elemente (5) in der Auflistung (2) visuell dargestellt werden, die in einem Zusammenhang mit dem wenigstens einen Objekt (4, 11, 12) stehen.

## Beschreibung

Die Erfindung betrifft ein Leitsystem für eine technische Anlage, insbesondere Fertigungs- oder Prozessanlage. Außerdem betrifft die Erfindung ein Verfahren zum Betrieb einer technischen Anlage, insbesondere Fertigungs- oder Prozessanlage.

Für die Bedienung und Beobachtung verfahrenstechnischer Anlagen werden symbolische Anlagenbilder erstellt, die die verfahrenstechnischen Zusammenhänge - insbesondere zwischen einzelnen Prozessobjekten - abstrahiert darstellen. Anlagenbilder setzen sich dabei aus statischen Symbolen (z.B. Leitungen, Rechtecke, usw.), dynamisierten Symbolen (z.B. in Abhängigkeit von Prozesswerten Leitungen mit Farbumschlag, Rechtecke mit Füllständen, usw.), Blocksymbolen (zur dynamisierten Visualisierung verfahrenstechnischer Prozessobjekte), komplexe Controls (z.B. Trendanzeigen, Meldefolgeanzeigen, usw.) und Container, um Inhalte aus unabhängigen und eigenständige Quellen visualisieren zu können (z.B. Webcams, Anlagenbilder modulare Anlagenteile, oder Applikationen wie ein Regleroptimierer oder KPI-Berechnungen) zusammen.

Zur Navigation zwischen Anlagenbildern, visualisierten SFC-Schrittketten (SFC = Sequential Flow Chart), Prozessobjekt-Detailansichten und dergleichen in einem Operator Station Client nutzen Operatoren für das Bedienen und Beobachten Anlagenbildhierarchien, in denen die Anlagenbilder hierarchisch strukturiert und mit Gruppenalarmen dynamisiert sind. Zudem verwenden die Operatoren die sogenannte "technologische Hierarchie", in der alle Automatisierungspläne (Anlagenbilder, SFCs, CFCs...) und Objekte wie Prozessobjekte... in einer Struktur gemäß der verfahrenstechnischen Anlage, vorliegen.

Selbst bei kleinen verfahrenstechnischen Anlagen können Anlagenbildhierarchien und technologische Hierarchien umfangreich ausfallen, so dass es für den Operator schwierig ist, die Pläne und Objekte zusammenzustellen, auf die er im Kontext seiner gegenwärtigen Tätigkeit angewiesen ist.

Noch schwieriger gestalte sich die Bestimmung der relevanten Automatisierungspläne und Objekte aus dem Kontext der Bedienung und Beobachtung heraus: Sind eine Meldefolgeanzeige mit aktiven Alarmen, eine visualisierte SFC-Schrittkette oder eine Trendanzeige mit zahlreichen Kurven geöffnet, kann der Operator nicht unmittelbar erkennen, welche Automatisierungspläne oder Objekte er für eine detailliertere Bedienung und Beobachtung benötigt.

In der EP 3 306 469 A1 ist ein Verfahren zum Erzeugen einer Equipment-Hierarchie, in welcher Prozessobjekte strukturiert hinterlegt sind, und welche eine technologische Sicht einer zu steuernden technischen Anlage repräsentiert, offenbart.

Der Erfindung liegt die Aufgabe zugrunde, ein Leitsystem für eine technische Anlage anzugeben, welches die Effizienz und die Flexibilität einer Bedienung und Beobachtung der technischen Anlage erhöht.

Diese Aufgabe wird gelöst durch ein Leitsystem für eine technische Anlage mit den Merkmalen des Anspruchs 1. Außerdem wird die Aufgabe gelöst durch ein Verfahren zum Betrieb einer technischen Anlage gemäß Anspruch 11. Vorteilhafte Weiterbildungen ergeben sich aus den abhängigen Ansprüchen.

Das erfindungsgemäße Leitsystem für eine technische Anlage, insbesondere Fertigungs- oder Prozessanlage, ist dazu ausgebildet, eine grafische Darstellung wenigstens eines Objektes und eine von der grafischen Darstellung separate Auflistung von verschiedenen, die technische Anlage betreffenden Elementen, in einer Bildanzeige zur Bedienung und Beobachtung durch einen Operator des Leitsystems visuell darzustellen. Das Leitsystem ist dadurch gekennzeichnet, dass es dazu ausgebildet ist, auf eine Anforderung des Operators zur Laufzeit der technischen Anlage hin die Auflistung derart anzupassen, dass ausschließlich Elemente in der Auflistung visuell dargestellt werden, die in einem Zusammenhang mit dem wenigstens einen Objekt stehen.

Bei der technischen Anlage kann es sich um eine Anlage aus der Prozessindustrie wie beispielsweise eine chemische, pharmazeutische, petrochemische oder eine Anlage aus der Nahrungs- und Genussmittelindustrie handeln. Hiermit umfasst sind auch jegliche Anlagen aus der Produktionsindustrie, Werke, in denen z.B. Autos oder Güter aller Art produziert werden. Technische Anlagen, die zur Durchführung des erfindungsgemäßen Verfahrens geeignet sind, können auch aus dem Bereich der Energieerzeugung kommen. Windräder, Solaranlagen oder Kraftwerke zur Energieerzeugung sind ebenso von dem Begriff der technischen Anlage umfasst.

Unter einem Leitsystem wird im vorliegenden Kontext ein computergestütztes, technisches System verstanden, das Funktionalitäten zum Darstellen, Bedienen und Leiten der technischen Anlage umfasst. Das Leitsystem kann auch Sensoren zur Ermittlung von Messwerten sowie verschiedene Aktoren umfassen. Zudem kann das Leitsystem sogenannte prozess- oder fertigungsnahe Komponenten umfassen, die zur Ansteuerung der Aktoren bzw. Sensoren dienen. Darüber hinaus kann das Leitsystem u.a. Mittel zur Visualisierung der verfahrenstechnischen Anlage und zu einem Engineering aufweisen. Das Leitsystem kann optional auch weitere Recheneinheiten für komplexere Regelungen und Systeme zur Datenspeicherung und -verarbeitung umfassen.

In an sich bekannter Weise ist das Leitsystem dazu ausgebildet, eine grafische Darstellung wenigstens eines Objektes und einer, von der grafischen Darstellung separaten Auflistung von Elementen, in einer Bildanzeige visuell darzustellen. Die visuelle Darstellung kann beispielsweise auf einem Computerbildschirm, einem Tablet oder einem Smartphone erfolgen. Beispielsweise kann das Objekt in Form eines Fensters auf einer rechten Seite des Computerbildschirms und die Auflistung auf einer linken Seite des Computerbildschirms dargestellt werden. Neben dem Objekt und der Auflistung kann das Leitsystem beliebig viele weitere Objekte/Auflistungen oder Vergleichbares darstellen.

Das Leitsystem ist erfindungsgemäß dazu ausgebildet, zur Laufzeit der technischen Anlage, also während deren Betrieb, auf eine Anforderung eines Operators des Leitsystems bzw. der technischen Anlage die Auflistung anzupassen. Unter einem Operator wird dabei ein menschlicher Bediener des technischen Systems verstanden. Der Operator interagiert mittels spezieller Benutzerschnittstellen mit der technischen Anlage bzw. deren Leitsystem und steuert spezielle technische Funktionen der technischen Anlage. Hierzu kann der Operator ein Bedien- und Beobachtungssystem des Leitsystems nutzen.

Die Anforderung des Operators nimmt das Leitsystem zur Laufzeit der technischen Anlage entgegen und passt daraufhin die dargestellte Auflistung an. Dabei erfolgt die Anpassung der Auflistung dahingehend, dass nur der Teil der Elemente in der Auflistung visuell dargestellt werden, die in einem Zusammenhang mit dem wenigstens einen Objekt stehen.

Das erfindungsgemäße Leitsystem versetzt den Operator in die Lage, gezielt die Auflistung auf seine Bedürfnisse im Kontext der Bedienung und Beobachtung des Objektes anzupassen. Die Auflistung, die bei technischen Anlage komplex und unübersichtlich sein kann, wird auf die wesentlichen Elemente reduziert, die das konkrete, vom Operator ausgewählte Objekt betreffen. Hierdurch kann der Operator zielgerichtet die weiteren Schritte in seiner Bedienung und Beobachtung der technischen Anlage vornehmen. Hierdurch kann die Sicherheit und Effizienz des Betriebs der technischen Anlage verbessert werden.

Generell kann der Zusammenhang zwischen dem Objekt der grafischen Darstellung und den Elementen der angepassten Auflistung sowohl in einer Projektierungsphase der technischen Anlage als auch zur Laufzeit der technischen Anlage festgelegt worden sein.

Das grafisch dargestellte Objekt kann eine Meldeanzeige sein, welche eine Meldung aus der technischen Anlage umfasst. Unter einer Meldung wird dabei ein Bericht vom Eintreten eines Ereignisses verstanden, das einen Übergang aus einem diskreten Zustand innerhalb der technischen Anlage in einen anderen diskreten Zustand darstellt. In diesem Fall reduziert das Leitsystem auf die Anforderung des Operators hin die Auflistung dahingehend, dass nur die technischen Objekte, insbesondere Prozessobjekte, dargestellt werden, denen eine oder mehrere der Meldungen zugeordnet ist. Der Zusammenhang zwischen dem Objekt (der Meldung) und den Elementen der Auflistung besteht in diesem Fall daraus, dass die Elemente ein Entstehungsort (dem technischen Objekt) der jeweiligen Meldung darstellen.

Die grafische Darstellung kann auch ein Werteverlauf eines Wertes der technischen Anlage sein. Der Wert stellt dabei das Objekt im Sinne der Erfindung dar. Auf die Anforderung des Operators hin reduziert das Leitsystems die Auflistung auf die Darstellung derjenigen Elemente, die mit dem Wert in einem Zusammenhang stehen. Zum Beispiel kann ein solches Element einen Messgeber repräsentieren, welcher den Wert bzw. dessen zeitlichen Verlauf in der technischen Anlage erfasst.

Die grafische Darstellung kann auch gemäß einem Sequential Flow Chart (SFC) aufgebaute Schrittketten als Objekt umfassen. Dabei stellt das Sequential Flow Chart eine Ablaufprogrammiersprache für "Programmable Logic Controller" gemäß der Norm IEC 61131-3 dar.

Besonders bevorzugt umfasst die Auflistung Referenzen auf Anlagenbilder der technischen Anlage. Ein Anlagenbild stellt dabei die funktionellen Zusammenhänge zwischen einzelnen Objekten einer mittels des Leitsystems bedienten und beobachteten technischen Anlage dar. Bei den Objekten kann es sich beispielsweise um Rohrleitungen, Tanks, Motoren, Ventile, Aktoren, Sensoren, Brenner oder Roboter handeln. Das Anlagenbild umfasst in der Regel statische und dynamisch änderbare Symbole oder Container, in denen beispielsweise Kamerabilder aus eigenständigen und unabhängigen Quellen dargestellt werden können. Beim Anwählen einer solchen Referenz bekommt der Operator durch das Leitsystem das betreffende Anlagenbild angezeigt. Das Leitsystem beschränkt hierbei die Auflistung auf diejenigen Anlagenbilder, die (unter anderem) das Objekt der grafischen Darstellung beinhalten bzw. mit diesem in einem Zusammenhang stehen. Wenn das Objekt beispielsweise eine Alarmmeldung darstellt und der Operator die Anforderung an das Leitsystem richtet, reduziert das Leitsystem die dargestellte Auflistung auf diejenigen Anlagenbilder, die die Elemente wie Pumpen oder Ventile umfassen, welche ursächlich für die Alarmmeldung sind. Der Operator kann dadurch gezielt die Anlagenbilder bedienen und beobachten, die die alarmverursachenden Elemente umfassen.

Die Auflistung kann auch virtuelle Repräsentationen von technischen Objekten der technischen Anlage umfassen, die vorzugsweise gemäß eines funktionellen Zusammenwirkens in der Auflistung gegliedert sind. In der Auflistung sind dabei beispielsweise verschiedene Sensoren und Aktoren enthalten, die innerhalb der technischen Anlage zusammenwirken, um technische Funktionalitäten bereitzustellen. Wenn das Objekt beispielsweise ein Werteverlauf eines Sensorwertes darstellt, wird die Auflistung auf den betreffenden Sensor und die mit dem Sensor in funktionaler Verbindung stehenden weiteren Elemente wie weitere Sensoren oder Aktoren konzentriert.

Bevorzugt umfasst die Auflistung von dem Operator zuvor zur Laufzeit der technischen Anlage festgelegte Selektionen. Solche Selektionen sind beliebige Kombinationen aus virtuellen Repräsentationen, Anlagenbildern oder sonstigen Elementen einer Bedienung und Beobachtung. Diese werden auf die Anforderung des Operators hin in der fokussierten Auflistung angezeigt, um den Operator gezielt hierauf zu lenken.

Das Leitsystem kann dazu ausgebildet sein, die Anforderung des Operators durch die Anwahl eines entsprechend visuell dargebotenen Symbols durch den Operator entgegenzunehmen. Dieses kann beispielsweise ein Symbol einer Lupe darstellen, welche den Operator auf eine hierdurch initiierbare Fokussierung hinweist. Der Operator kann hierbei die Anforderung an das Leitsystem durch Anwählen des Symbols richten (Mausklick, Fingerberührung etc.).

Zusätzlich oder alternativ kann das Leitsystem auch dazu ausgebildet sein, die Anforderung des Operators durch eine Spracheingabe durch den Operator entgegenzunehmen. Hierbei drückt der Operator seinen Anforderungswunsch sprachlich aus. Das Leitsystem kann diesen sprachlichen Anforderungswunsch erkennen und darauffolgend weitere Aktionen initiieren.

Im Rahmen einer bevorzugten Weiterbildung der Erfindung umfasst das Leitsystem einen Operator Station Server und einen Operator Station Client. Dabei ist der Operator Station Client dazu ausgebildet, die visuellen Darstellungen, die wie zuvor erläutert ausgebildet sein können, zu erzeugen, die Anforderung durch den Operator entgegenzunehmen und an den Operator Station Server weiterzuleiten. Der Operator Station Server ist dazu ausgebildet, die Elemente in der Auflistung visuell zu identifizieren, die in einem Zusammenhang mit dem wenigstens einen Objekt stehen, und eine dahingehende Information an den Operator Station Client weiterzuleiten, damit der Operator Station Client die Darstellung der Auflistung anpasst.

Unter einem "Operator Station Server" wird vorliegend ein Server verstanden, der zentral Daten eines Bedien- und Beobachtungssystems sowie in der Regel Alarm- und Messwertarchive eines Leitsystems einer technischen Anlage erfasst und Benutzern zur Verfügung stellt. Der Operator Station Server stellt in der Regel eine Kommunikationsverbindung zu Automatisierungssystemen der technischen Anlage her und gibt Daten der technischen Anlage zur Visualisierung an sogenannte Operator Station Clients weiter, die zur Bedienung und Beobachtung eines Betriebs der einzelnen Funktionselemente der technischen Anlage dienen. Der Operator Station Server kann über Client-Funktionen verfügen, um auf die Daten (Archive, Meldungen, Tags, Variablen) anderer Operator Station Server zuzugreifen.

Dadurch sind Bilder eines Betriebs der technischen Anlage auf dem Operator Station Server mit Variablen anderer Operator Station Server (Server-Server-Kommunikation) kombinierbar. Bei dem Operator Station Server kann es sich, ohne sich darauf zu beschränken, um einen SIMATIC PCS 7 Industrial Workstation Server der Firma SIEMENS handeln.

Ein Operator der technischen Anlage kann über den Operator Station Client, welcher beispielsweise ein Tablet, ein Smartphone, ein Personal Computer oder dergleichen sein kann, zum Zwecke eines Bedienens und Beobachtens der technischen Anlage auf den Operator Station Server zugreifen.

Die zuvor formulierte Aufgabe wird zudem gelöst durch Verfahren zum Betrieb einer technischen Anlage, insbesondere Fertigungs- oder Prozessanlage, mit einem Leitsystem, welches eine grafische Darstellung wenigstens eines Objektes und eine von der grafischen Darstellung separate Auflistung von Elementen in einer Bildanzeige zur Bedienung und Beobachtung durch einen Operator des Leitsystems visuell darstellt, und welches auf eine Anforderung des Operators hin die Auflistung derart anpasst, dass ausschließlich Elemente in der Auflistung visuell dargestellt werden, die in einem Zusammenhang mit dem wenigstens einen Objekt stehen.

Bevorzugt nimmt das Leitsystem die Anforderung des Operators durch die Anwahl eines entsprechend visuell dargebotenen Symbols durch den Operator entgegen. Alternativ oder zusätzlich nimmt das Leitsystem die Anforderung des Operators durch eine Spracheingabe durch den Operator entgegen.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Es zeigen:
- FIG 1: eine erste grafische Anzeige eines Leitsystems gemäß einem ersten Aspekt;
- FIG 2: die erste grafische Anzeige des Leitsystems gemäß einem zweiten Aspekt;
- FIG 3: eine zweite grafische Anzeige eines Leitsystems gemäß einem ersten Aspekt;
- FIG 4: die zweite grafische Anzeige des Leitsystems gemäß einem zweiten Aspekt; und
- FIG 5: ein Leitsystem in einer schematischen Darstellung.

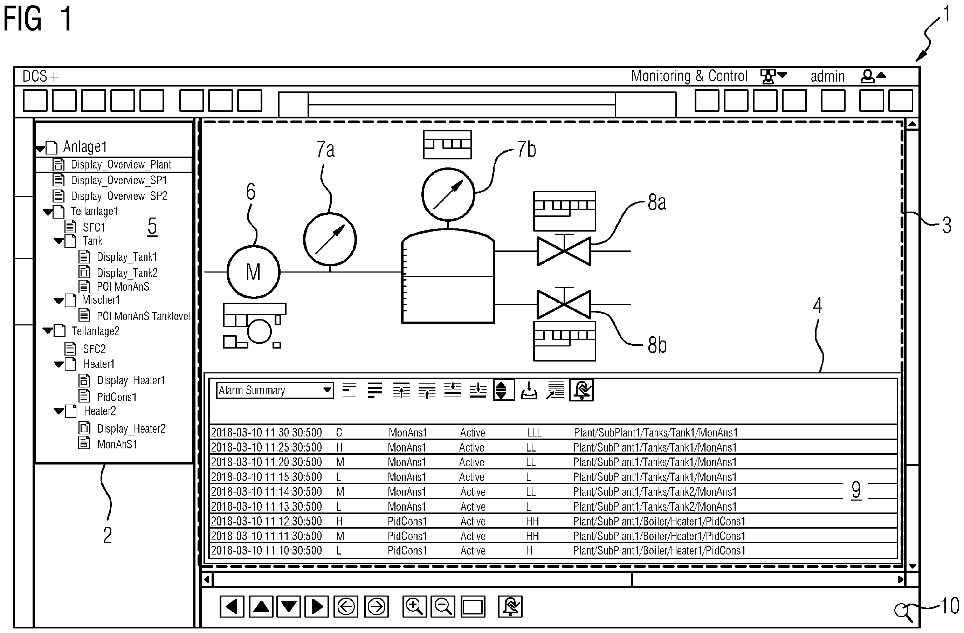

In FIG 1 ist eine grafische Anzeige 1 dargestellt, die von einem Leitsystem im Rahmen eines Bedienens und Beobachtens einer technischen Anlage für einen Operator der technischen Anlage bereitgestellt wird. Die grafische Anzeige 1 umfasst auf der linken Seite von FIG 1 eine Auflistung 2 und auf der rechten Seite von FIG 1 ein Anlagenbild 3 (durch eine gestrichelte Linie gekennzeichnet), in welches eine Meldeanzeige 4 integriert ist.

Die Auflistung 2 umfasst eine Vielzahl von Referenzen 5 auf Anlagenbilder, die von dem Operator des Leitsystems anwählbar sind, um sie auf der rechten Seite in FIG 1 visuell darzustellen. Die Referenzen 5 weisen beispielhaft die Namen "Display_Tank1", "Display_Overview_SP1" oder "Display_Heater2" auf.

Das auf der rechten Seite von FIG 1 gezeigte Anlagenbild 3 repräsentiert einen Teil der technischen Anlage. Dieser Teil umfasst einen Motor 6, Sensoren 7a, 7b und Ventile 8a, 8b. Der Operator kann über entsprechende Bedienschnittstelle aktuelle Werte auslesen und Bedienoperationen wie das Ändern von Sollwerten vornehmen.

In der Meldeanzeige 4 sind verschiedene Meldungen 9 dargestellt. In einer ersten Spalte ist ein Zeitpunkt einer Aktivierung der jeweiligen Meldung 9 dargestellt. In weiteren Spalten sind Informationen bezüglich einer Kritikalität, einer Kategorisierung und einer Eingruppierung der Meldung in einer Hierarchie der technischen Anlage dargestellt.

Möchte ein Operator sich bei den Elementen der Auflistung 2 auf diejenigen Elemente beschränken, die in einem Zusammenhang mit den Meldungen der Meldeanzeige stehen, kann er eine entsprechende Anforderung an das Leitsystem richten. Dies erfolgt durch eine Anwahl (Mausklick, Fingerdruck) eines Symbols 10, welches in Form einer Lupe ausgebildet ist, und eine nachfolgende Anwahl der Meldeanzeige 4. Es ist auch möglich, zuerst die Meldeanzeige 4 zu selektieren und danach das Symbol 10 anzuwählen.

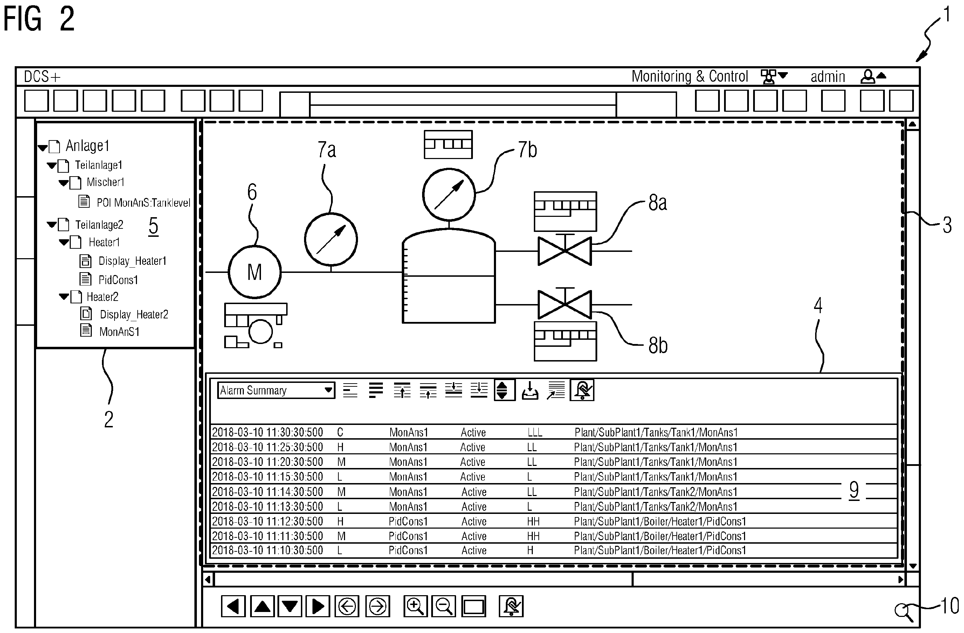

Stellt der Operator die Anforderung an das Leitsystem durch Anwahl des Lupen-Symbols 10, so ermittelt das Leitsystem, welche Referenzen 5 auf Anlagenbilder in einem Zusammenhang mit den Meldungen 9 der Meldeanzeige 4 stehen. Konkret bedeutet dies, dass das Leitsystem ermittelt, in welchen Anlagenbildern technische Objekte befindlich sind, die entweder ursächlich für die Meldungen 9 oder mit diesen in einem Wirkzusammenhang stehen. Das Lupen-Symbol 10 (oder vergleichbare Symbole) kann auch direkt in einem Bereich der Meldeanzeige 4 angeordnet sein. Wie in FIG 2 zu erkennen ist, ist die Auflistung 2 deutlich übersichtlicher und fokussierter als vor der Anforderung, so dass sich das Bedienen und Beobachten des Operators deutlich verbessern lässt.

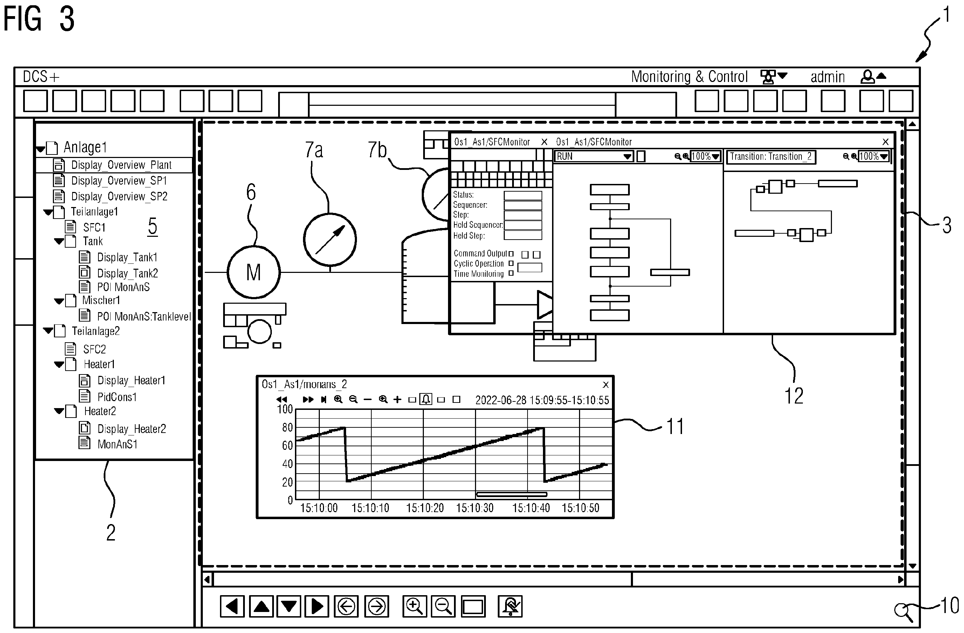

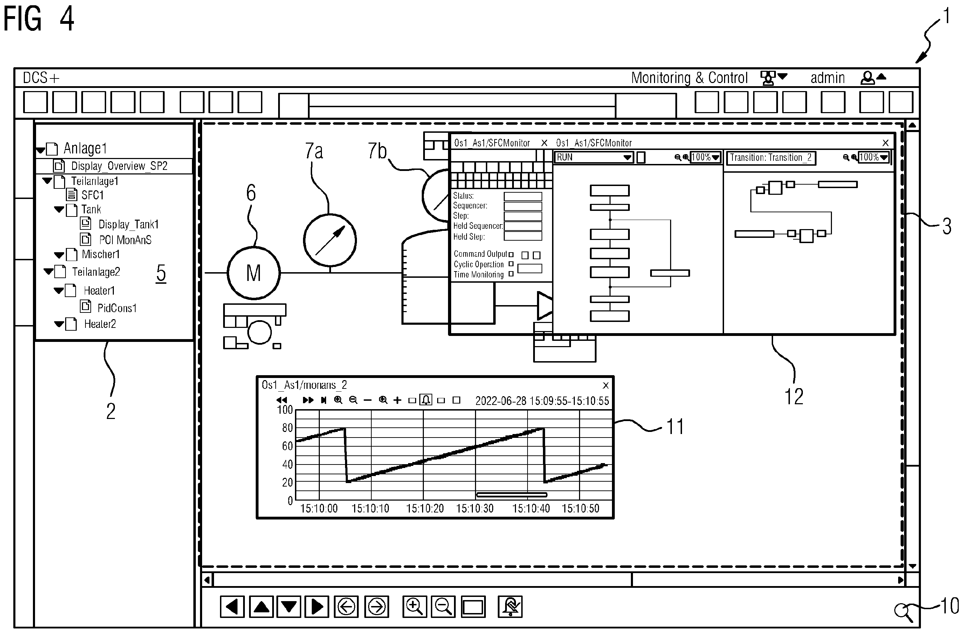

In FIG 3 sind anstelle der Meldeanzeige 4 ein Werteverlauf 11 eines Wertes aus der technischen Anlage und gemäß dem Sequential Flow Chart (SFC) aufgebaute Schrittketten 12 in dem auf der rechten Seite von FIG 3 dargestellten Anlagenbild 3 enthalten. Durch eine Anwahl des Werteverlaufs 11 und/oder der Schrittketten 12 und des Symbols 10 (das auch direkt in einem Bereich des Werteverlaufs 11 oder der Schrittketten 12 angeordnet sein kann) wird die Auflistung 2 auf der linken Seite von FIG 3 analog zu den vorherigen Ausführungen auf die Elemente 5 fokussiert, die in einem Zusammenhang mit dem Werteverlauf 11 und/oder den Schrittketten 12 stehen. Die entsprechend angepasste Auflistung 2 ist FIG 4 zu entnehmen.

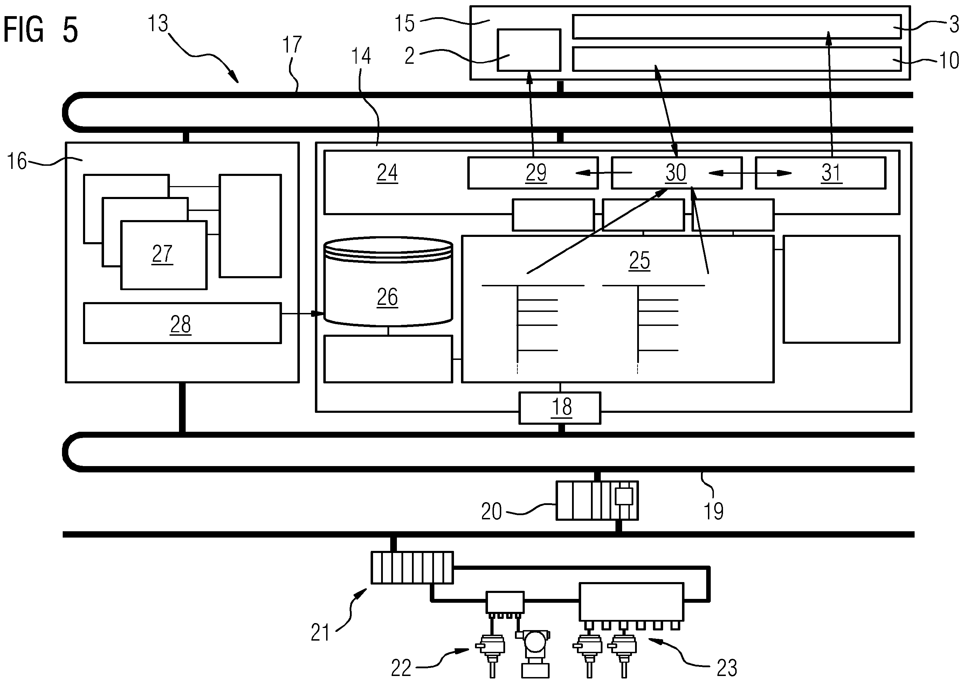

In FIG 5 ist ein Leitsystem 13 für die Bedienung und Beobachtung einer als Prozessanlage ausgebildeten technischen Anlage schematisch dargestellt. Das Leitsystem 13 umfasst einen Operator Station Server 14,einen Operator Station Client 15 und einen Engineering Station Server 16. Der Operator Station Server 14, der Operator Station Client 15 und der Engineering Station Sever 16 sind über einen Terminalbus 17 miteinander und optional mit nicht dargestellten weiteren Komponenten des Leitsystems 13 wie einem Archivserver verbunden.

Ein Benutzer bzw. Operator kann zum Zwecke des Bedienens und Beobachtens über den Operator Station Client 15 mittels des Terminalbus 17 auf den Operator Station Server 14 zugreifen. Analog dazu kann ein Projekteur über einen in FIG 5 nicht dargestellten Engineering Station Client auf den Engineering Station Server 16 zugreifen, um eine Projektierung der Automatisierung für die technische Anlage zu erstellen. Der Terminalbus 17 kann, ohne sich darauf zu beschränken, beispielsweise als Industrial Ethernet ausgebildet sein.

Der Operator Station Server 14 weist eine Geräteschnittstelle 18 auf, die mit einem Anlagenbus 19 verbunden ist. Über diese Geräteschnittstelle 18 ist der Operator Station Server 14 mit einem Automatisierungsgerät 20 sowie mit weiteren Komponenten der verfahrenstechnischen Anlage wie Peripheriegeräten 21, 22, 23 verbunden und kann mit diesen kommunizieren. Der Anlagenbus 19 kann, ohne sich darauf zu beschränken, beispielsweise als Industrial Ethernet ausgebildet sein.

Auf dem Operator Station Server 14 sind (unter anderem) ein Visualisierungsdienst 24, ein Prozessabbild 25 und ein Konfigurationsspeicher 26 implementiert. Der in dem Operator Station Server 14 integrierte Visualisierungsdienst 24 initiiert eine Übertragung von Visualisierungsinformationen an den Operator Station Client 15. Der Operator Station Client 15 ist dazu ausgebildet, eine Visualisierung, d.h. eine grafische Darbietung, insbesondere von Anlagenbildern, zum Bedienen und Beobachten der Prozessanlage darzustellen.

In dem Prozessabbild 25 des Operator Station Servers 14 ist eine Momentaufnahme der (Signal-)Zustände von mit dem Operator Station Server 14 verbundenen Geräten und/oder Applikationen hinterlegt.

In dem Engineering Station Server 16 ist ein Projektierungswerkzeug 27 implementiert, mithilfe dessen der Projekteur eine Automatisierung für die Prozessanlage erzeugt. Nach Fertigstellung der Automatisierung wird diese durch einen Kompilierungsdienst 28 in ein für das Automatisierungsgerät 20 und den Operator Station Server 14 verständliches Datenformat gebracht und an die beiden Geräte übertragen. Der für die Bedienung und Beobachtung der Prozessanlage vorgesehene Teil der Automatisierungsdaten wird in dem Konfigurationsspeicher 26 des Operator Station Servers 14 hinterlegt.

Ein Auflistungsdienst 29 des Visualisierungsdienstes 24 erzeugt auf Basis der in dem Konfigurationsspeicher 26 hinterlegten Automatisierungsdaten eine Auflistung 2, wie sie anhand der Figuren 1-4 verdeutlicht ist. Ein Bedienelementendienst 30 erzeugt auf Basis der in dem Konfigurationsspeicher 26 hinterlegten Automatisierungsdaten unter anderem das in den Figuren 1-4 gezeigte Symbol 10 in Form einer Lupe. Ein Anlagenbilddienst 31 erzeugt auf Basis der in dem Konfigurationsspeicher 26 hinterlegten Automatisierungsdaten und auf Basis der aktuellen Prozessmesswerte aus dem Prozessabbild 25 ein Anlagenbild 3, wie es ebenfalls in den Figuren 1-4 verdeutlicht ist.

Wie zuvor bereits erläutert, kann die Zentralisierung der Auflistung 2 über das Symbol 10 angestoßen werden. Der dazugehörige Bedienelementendienst 30 ermittelt in Kombination mit dem Anlagenbilddienst 31 und dem Auflistungsdienst 29 die Zusammenhänge zwischen den einzelnen Objekten des Anlagenbildes 3 (wie einer Meldeanzeige 4, einem Werteverlauf 11 oder einer Schrittkette 12) und den Elementen der Auflistung 2. Die Zusammenhänge können dabei bereits beim Kompilieren und Laden der Automatisierungsdaten oder später zur Laufzeit der Prozessanlage im Konfigurationsspeicher 26 hinterlegt worden sein.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Leitsystem (13) für eine technische Anlage, insbesondere Fertigungs- oder Prozessanlage, das dazu ausgebildet ist, eine grafische Darstellung wenigstens eines Objektes (4, 11, 12) und eine von der grafischen Darstellung separate Auflistung (2) von verschiedenen, die technische Anlage betreffenden Elementen, in einer Bildanzeige (1) zur Bedienung und Beobachtung durch einen Operator des Leitsystems (13) visuell darzustellen,
**dadurch gekennzeichnet, dass**
das Leitsystem (13) dazu ausgebildet ist, auf eine Anforderung des Operators zur Laufzeit der technischen Anlage hin die Auflistung (2) derart anzupassen, dass ausschließlich Elemente (5) in der Auflistung (2) visuell dargestellt werden, die in einem Zusammenhang mit dem wenigstens einen Objekt (4, 11, 12) stehen.

2. Leitsystem (13) nach Anspruch 1, bei dem die grafische Darstellung eine Meldeanzeige (4) ist, welche wenigstens eine Meldung der technischen Anlage als Objekt (4) umfasst.

3. Leitsystem (13) nach Anspruch 1 oder 2, bei dem die grafische Darstellung ein Werteverlauf (11) eines Wertes der technischen Anlage als Objekt (11) ist.

4. Leitsystem (13) nach einem der vorangegangenen Ansprüche, bei dem die grafische Darstellung gemäß einem Sequential Flow Chart (SFC) aufgebaute Schrittketten (12) als Objekt (12) umfasst.

5. Leitsystem (13) nach einem der vorangegangenen Ansprüche, bei dem die Auflistung (2) Referenzen (5) auf Anlagenbilder der technischen Anlage umfasst.

6. Leitsystem (13) nach einem der vorangegangenen Ansprüche, bei dem die Auflistung (2) virtuelle Repräsentationen von technischen Objekten der technischen Anlage umfasst, die vorzugsweise gemäß eines funktionellen Zusammenwirkens in der Auflistung (2) gegliedert sind.

7. Leitsystem (13) nach einem der vorangegangenen Ansprüche, bei dem die Auflistung (2) von dem Operator zuvor zur Laufzeit der technischen Anlage festgelegte Selektionen umfasst.

8. Leitsystem (13) nach einem der vorangegangenen Ansprüche, das dazu ausgebildet ist, die Anforderung des Operators durch die Anwahl eines entsprechend visuell dargebotenen Symbols (10) durch den Operator entgegenzunehmen.

9. Leitsystem (13) nach einem der vorangegangenen Ansprüche, das dazu ausgebildet ist, die Anforderung des Operators durch eine Spracheingabe durch den Operator entgegenzunehmen.

10. Leitsystem (13) nach einem der vorangegangenen Ansprüche, welches einen Operator Station Server (14) und einen Operator Station Client (15) umfasst, wobei der Operator Station Client (15) dazu ausgebildet ist, die visuellen Darstellungen gemäß einem der vorangegangenen Ansprüche zu erzeugen, und die Anforderung durch den Operator entgegenzunehmen und an den Operator Station Server (14) weiterzuleiten, wobei der Operator Station Server (14) dazu ausgebildet ist, die Elemente (5) in der Auflistung (2) visuell zu identifizieren, die in einem Zusammenhang mit dem wenigstens einen Objekt (4, 11, 12) stehen, und eine dahingehende Information an den Operator Station Client (15) weiterzuleiten, damit der Operator Station Client (15) die Darstellung der Auflistung (2) anpasst.

11. Verfahren zum Betrieb einer technischen Anlage, insbesondere Fertigungs- oder Prozessanlage, mit einem Leitsystem (13), welches eine grafische Darstellung wenigstens eines Objektes (4, 11, 12) und eine von der grafischen Darstellung separate Auflistung (2) von Elementen (5) in einer Bildanzeige (1) zur Bedienung und Beobachtung durch einen Operator des Leitsystems (13) visuell darstellt,
und welches auf eine Anforderung des Operators hin die Auflistung (2) derart anpasst, dass ausschließlich Elemente (5) in der Auflistung (2) visuell dargestellt werden, die in einem Zusammenhang mit dem wenigstens einen Objekt (4, 11, 12) stehen.

12. Verfahren nach Anspruch 11, bei dem das Leitsystem (13) die Anforderung des Operators durch die Anwahl eines entsprechend visuell dargebotenen Symbols (10) durch den Operator entgegennimmt.

13. Verfahren nach Anspruch 11, bei dem das Leitsystem (13) die Anforderung des Operators durch eine Spracheingabe durch den Operator entgegennimmt.
